# EUROPEAN PATENT SPECIFICATION

(11) **EP 0 350 154 B1**
(45) Date of publication and mention of the grant of the patent: **26.10.1994**
(21) Application number: 89304751.4
(22) Date of filing: 10.05.1989
(51) Int. Cl.: F21V 8/00

(54) **Light source**
Lichtquelle
Source lumineuse

(30) Priority: 08.07.1988 US 216750
(43) Date of publication of application: 10.01.1990
(73) Proprietor: PARKER HANNIFIN CORPORATION, Cleveland Ohio 44112 (US)
(72) Inventor: Hassler, William L.,Jr., El Toro California 92630 (US)
(74) Representative: Purvis, William Michael Cameron

(56) References cited:
- DE-A- 3 322 393
- DE-U- 7 244 296
- FR-A- 2 551 180

## Description

The invention relates to light sources and more particularly to dispersed or diffused light sources.

There are many uses of diffused light sources and some require a uniform dispersion of light over a predetermined length. Often these light sources must be confined to narrow or small spaces. For example, the use of charge-coupled devices to read slits which allow light to pass therethrough from a light source require this type of lighting. Each pixel along the length of the charge-coupled device is desired to be acted upon by the same intensity of light. This is especially true in position sensing devices such as that shown in Patent specification USA-4,074,258 where differences in light intensity or direction may cause a misreading of the position sensed by the light source and charge-coupled device.

Among the devices which are currently available for diffused, linear light emission are electroluminescent panels. Such panels are commercially available from Luminescence Systems and from Quantex. However, because of the manner in which the light is generated by these devices, they require a high alternating current voltage, have a short life, tend to fade over their lives so that the intensity of light emitted is not constant and have a brightness which is relatively low.

DE-U-7 244 296 discloses a light source for producing uniform dispersed light emission over an elongate portion thereof comprising a prism into one end of which light can be introduced, one longitudinal face of the prism having transverse furrows therein with a reflective coating on the faces forming the furrows from which the light entering the prism is reflected to pass perpendicularly through an elongate front face of the prism and produce an elongate light source.

According to the invention there is provided a light source for producing a relatively uniform, dispersed light emission along an elongate portion thereof, comprising:
a prism having two ends, an emission face and a plurality of optically reflective planar faces, formed of optically transparent material having a relatively high index of refraction and shaped to capture light emitted longitudinally therein;
light emitting means disposed to emit light longitudinally in the prism so as to be captured therein; and
an optically transparent and light dispersing window in the prism extending longitudinally of the emission face and so shaped as to emit through the window light captured in the prism as it is emitted from the light emitting means in a dispersed, longitudinally uniform way;
characterised in that
the light emitting means comprises first and second light emitting diodes disposed each at a respective end of the prism;
the window is provided in the emission face, has a shape which linearly narrows as it extends from its middle towards the light emitting diodes, has truncated ends and comprises a portion of the emission face which is frosted so as to reduce reflection and to increase dispersion; and
the emission face and the reflective planar faces together form a hexagonal cross section and the reflective planar faces form right angle prism sides adjacent the emission face.

Such a light source can have a diffuse linear emission, a low, direct current power requirement and a relatively long life.

Such a light source can be produced at relatively low cost, can provide a relatively bright, constant, light intensity over its life and can have a relatively small package so that it can be used in applications requiring this feature.

Preferably the prism is formed of polycarbonate.

The invention is diagrammatically illustrated by way of example in the accompanying drawing, in which:-
Figure 1 is an exploded perspective view of a light-source according to the invention;
Figure 2 is an end view of a portion of the light source shown in Figure 1;
Figure 3 is a plan view of the portion shown in Figure 2; and
Figure 4 is a side view of the portion shown in Figure 2.

Referring to the drawing, a light source 11 includes a prism 13 mounted on a circuit board 15. Light emitting diodes 17 and 19 are moulded into the ends of the prism 13 so that their leads extend therefrom. Leads 21 and 23 extend from the light emitting diode 17 and leads 25 and 27 extend from the light emitting diode 19. The leads 21 and 25 are connected to a circuit path 29, the lead 23 is connected to a circuit path 31 and the lead 27 is connected to a circuit path 33. By connecting a direct current power source across contact points 35 and 37 of the circuit paths 31 and 33, respectively, the light emitting diodes 17 and 19 can be illuminated by being brought into series connection with the power source.

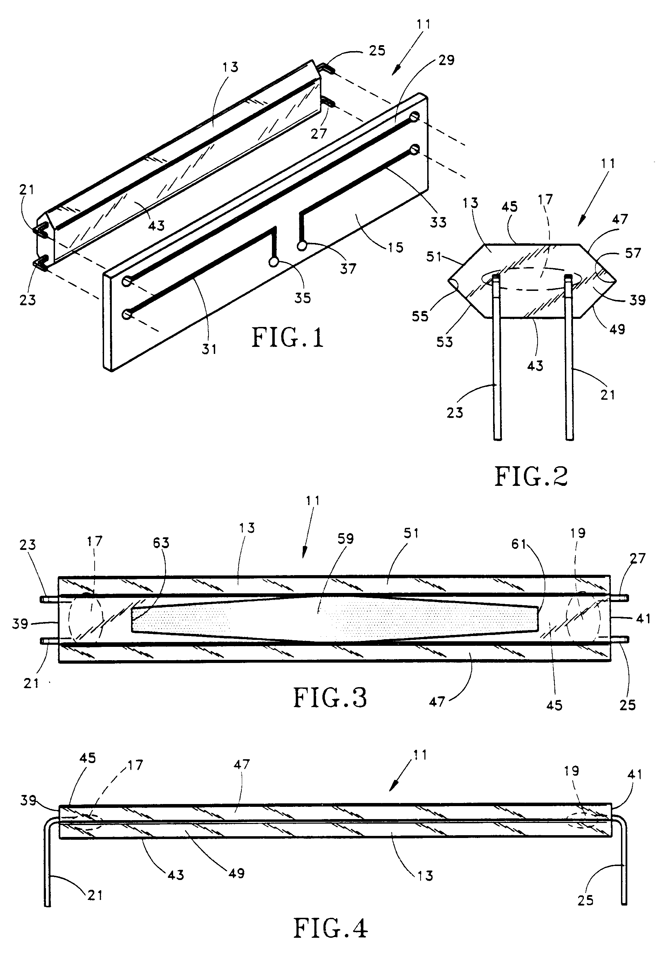

The prism 13 has an elongate parallelepiped shape. As shown in Figure 2, the prism 13 has a hexagonal cross section. Thus, the prism 13 has a first end surface 39, a second end surface 41, a base surface 43, an upper surface 45 and side surfaces 47, 49, 51 and 53. The end surfaces 39 and 41 are planar and hexagonal in shape. The side surfaces 47, 49, 51 and 53 are planar and rectangular in shape. The base surface 43 and the upper surface 45 are planar and rectangular in shape with a width which is approximately twice the width of the side surfaces. All of the surfaces are polished or moulded in a smooth way so as to be reflective.

The shape of the prism 13 is designed to capture light emitted longitudinally into the ends thereof. Particularly, the sides 51 and 53 join at a right angle 55 to produce a right angle prism reflection of light rays directed from the interior of prism 13. Similarly, the sides 47 and 49 join at a right angle 57 to produce a right angle prism reflection of light rays directed from the interior of prism 13. Together the right angle prism 55 and the right angle prism 57 face each other across the prism 13 so as to capture the light reflected back and forth across the sides of the prism 13.

The sides 47, 49, 51 and 53 join the base surface 43 and the upper surface 45 at interior angles of 135 degrees. This ensures that light reflected from one of the sides will continue to be reflected as it traces a path along the interior of the prism 13. The light emitting diodes 17 and 19 are disposed at the centre of the hexagonal ends 39 and 41 so that most of the light emitted from these LED's will pass longitudinally into the prism or at least at an angle sufficient to be reflected as opposed to transmitted through the surfaces 43, 45, 47, 49, 51 and 53. Thus, the effect of the placement of the surfaces of the prism 13 is to provide a light capturing tube or pipe of material. It is desirable to form the prism 13 of a substance having a relatively high index of refraction with high transparency. Polycarbonate is ideal for this purpose especially since polycarbonate is mouldable and can be moulded about the light emitting diodes 17 and 19. Commercially available light emitting diodes 17 and 19 can have polycarbonate outer shells, as well.

The upper surface 45 of the prism 13 has a window 59 disposed at its middle and extending between the diodes 17 and 19. The window 59 is formed by frosting the otherwise smooth, reflective surface of the upper surface 45. This frosting can be achieved by sandblasting or chemical etching of the mould. The frosting forms a surface which transmits as opposed to reflects and transmits in a diffused manner, as opposed to a directed manner, light which encounters the frosted surface from the interior of the prism 13. The desired shape can be achieved by forming the correct shape in the mould and by injection moulding of the prism.

The window 59 has a wide diamond shape with truncated ends 61 and 63, adjacent the LED's 17 and 19. In other words, the window 59 is widest at the longitudinal centre of the upper surface 45 and tapers linearly toward the ends 39 and 41. The truncated ends 61 and 63 of the window 59 are disposed so that light emitted from the LED's 17 and 19 which encounters the upper surface 45 prior to the truncated ends 61 and 63 will be reflected internally in the prism 13.

The amount of tapering of the window 59 toward its ends 61 and 63 is empirically determined so as to provide a uniform linear emission of light along the length of the window 59. Even though light is repeatedly reflected internally in the prism 13, the close proximity of the ends 63 and 61 to their respective light emitting diodes 17 and 19 requires that the windows be narrower at this point than at the middle of the window 59. The amount of taper is determined so that the intensity of light emitted along the length of the window 59 is uniform.

The light emitting diodes 17 and 19 can be of a variety of types. A type which is especially suited for use with a charge-coupled device in a position sensing machine would be an infrared LED, for example Siemen's SFH487P. This device is a 50 milliamp, 1.5 volt, 20 milliwatt infrared emitter. Other light emitting diodes can be chosen for emitting light of different frequencies or having different intensities.

Although the present invention can be made in a variety of sizes, the one depicted in the drawings and described herein is approximately 64 mm (2-1/2 inches) long, 8.5 mm (1/3 inch) wide and 3.2 mm (1/8 inch) in height. As can be seen, this size is ideal for providing a relatively long, diffuse, linearly uniform emission of light. This is achieved while maintaining a relatively small package.

Because light emitting diodes are relatively stable, have long life and have the desired frequency characteristics, a light source according to the invention can have all the advantages of the light emitted by light emitting diodes while also producing a diffuse, linearly uniform emission. A very large proportion of the light emitted by the LED's is emitted through the window 59. This can be achieved with a single piece, exceptionally sturdy construction. If desired, two or more LED's can be provided in each end of the prism 13 to provide a greater intensity of light. Also, if it is not desired to mould the LED's into the ends of the prism 13, the LED's can be attached to the ends of the prism, for example by epoxy cement.

## Claims

1. A light source (11) for producing a relatively uniform, dispersed light emission along an elongate portion thereof, comprising:
a prism (13) having two ends, an emission face (45) and a plurality of optically reflective planar faces (43, 47, 49, 51, 53), formed of optically transparent material having a relatively high index of refraction and shaped to capture light emitted longitudinally therein; light emitting means (17, 19) disposed to emit light longitudinally in the prism (13) so as to be captured therein; and
an optically transparent and light dispersing window (59) in the prism (13) extending longitudinally of the emission face (45) and so shaped as to emit through the window (59) light captured in the prism (13) as it is emitted from the light emitting means (17, 19) in a dispersed, longitudinally uniform way;
characterised in that
the light emitting means comprises first and second light emitting diodes (17, 19) disposed each at a respective end of the prism (13);
the window (59) is provided in the emission face (45), has a shape which linearly narrows as it extends from its middle towards the light emitting diodes (17, 19), has truncated ends (61, 63) and comprises a portion of the emission face (45) which is frosted so as to reduce reflection and to increase dispersion; and
the emission face (45) and the reflective planar faces (43, 47, 49, 51, 53) together form a hexagonal cross section and the reflective planar faces form right angle prism sides (47, 49, 51, 53) adjacent the emission face (45).

2. A light source according to claim 1, wherein the prism (13) is formed of polycarbonate.

3. A light source according to claim 2, wherein the light emitting diodes (17, 19) are moulded into the ends of the polycarbonate prism (13).

## Patentansprüche

1. Lichtquelle (11) zur Erzeugung einer relativ einheitlichen, gestreuten Lichtemission entlang einem länglichen Abschnitt davon, mit:
einem Prisma (13) mit zwei Enden, einer Emissionsfläche (45) und einer Vielzahl von optisch reflektierenden planaren Flächen (43, 47, 49, 51, 53), die aus einem optisch transparenten Material gebildet sind, welches eine relativ hohe Brechzahl aufweist, und die so geformt sind, daß sie Licht einfangen, das in der Längsrichtung darin ausgesandt wird; Lichtemissionsmitteln (17, 19), die angeordnet sind, um Licht in der Längsrichtung des Prismas (13) auszusenden, damit dieses darin eingefangen werden kann; und
einem optisch transparenten und Licht streuenden Fenster (59) in dem Prisma (13), das sich in der Längsrichtung der Emissionsfläche (45) erstreckt und so geformt ist, daß es durch das Fenster (59) das in dem Prisma (13) eingefangene Licht aussenden kann, wenn dieses von den Lichtemissionsmitteln (17, 19) in einer gestreuten, in Längsrichtung einheitlichen Art und Weise ausgesandt wird,
dadurch gekennzeichnet, daß
das Lichtemissionsmittel erste und zweite Lumineszenzdioden (17, 19) umfaßt, die sich jeweils an einem entsprechenden Ende des Prismas (13) befinden,
das Fenster (59) in der Emissionsfläche (45) vorgesehen ist, eine Form aufweist, die sich ausgehend von ihrer Mitte in Richtung auf die Lumineszenzdioden (17, 19) linear verengt, abgestumpfte Enden (61, 63) aufweist und einen Abschnitt der Emissionsfläche (45) umfaßt, der mattiert ist, um so die Reflexion zu verringern und die Dispersion zu erhöhen, und
daß die Emissionsfläche (45) und die reflektierenden planaren Flächen (43, 47, 49, 51, 53) zusammen einen hexagonalen Querschnitt bilden und die reflektierenden planaren Flächen rechtwinklige Prismenseiten (47, 49, 51, 53) nahe der Emissionsfläche (45) bilden.

2. Lichtquelle nach Anspruch 1, bei der das Prisma (13) aus Polycarbonat gebildet ist.

3. Lichtquelle nach Anspruch 2, bei der die Lumineszenzdioden (17, 19) in den Enden des Polycarbonatprismas (13) angeordnet sind.

## Revendications

1. Source lumineuse (11) pour produire une émission lumineuse dispersée relativement uniforme le long de sa partie allongée, comportant :
un prisme (13) ayant deux extrémités, une face d'émission (45) et une pluralité de faces planes optiquement réfléchissantes (43, 47, 49, 51, 53), constitué d'un matériau optiquement transparent ayant un relativement haut indice de réfraction et conformé pour capturer la lumière émise longitudinalement en son sein ; des moyens d'émission de lumière (17, 19) disposés pour émettre une lumière longitudinalement dans le prisme (13) de manière à y être capturée ; et une fenêtre (59) de dispersion de lumière, optiquement transparente, cette fenêtre étant aménagée dans le prisme (13) en s'étendant longitudinalement sur la face d'émission (45) et en étant conformée pour l'émission à travers la fenêtre (59) de la lumière capturée dans le prisme (13) lorsqu'elle est émise à partir des moyens d'émission de lumière (17, 19) d'une manière uniformément dispersée longitudinalement ; caractérisée en ce que :
- les moyens d'émission de lumière comportent une première et une seconde diodes à émission de lumière (17, 19) disposées respectivement chacune à une extrémité du prisme (13),
- la fenêtre (59) est disposée dans la face d'émission (45), présente une forme rétrécie linéairement à partir de son milieu jusque vers les diodes à émission de lumière (17, 19), comporte des extrémités tronquées (61, 63) et comprend une partie de la face d'émission (45) qui est dépolie de manière à réduire la réflexion et augmenter la dispersion, et
- la face d'émission (45) et les faces planes réfléchissantes (43, 47, 49, 51, 53) forment ensemble une section transversale hexagonale tandis que les faces planes réfléchissantes forment les côtés du prisme à angle droit (47, 49, 51, 53) au voisinage de la face d'émission (45).

2. Source lumineuse selon la revendication 1, caractérisée en ce que le prisme (13) est constitué de polycarbonate.

3. Source lumineuse selon la revendication 2, caractérisée en ce que les diodes à émission de lumière (17, 19) sont moulées dans les extrémités du prisme en polycarbonate (13).
